# EUROPEAN PATENT SPECIFICATION

(11) **EP 0 965 856 B1**
(45) Date of publication and mention of the grant of the patent: **05.11.2003**
(21) Application number: 98111080.2
(22) Date of filing: 17.06.1998
(51) Int. Cl.: G01S 1/04, G01S 5/14

(54) **Method and apparatus for the deception of satellite navigation**
Verfahren und Gerät zur Satellitennavigations-Täuschung
Procédé et dispositif pour leurrer la navigation par satellite

(43) Date of publication of application: 22.12.1999
(73) Proprietor: C. Plath GmbH Nautisch-Elektronische Technik, 20097 Hamburg (DE)
(72) Inventor: Riemschneider, Karl-Ragmar, Dr.-Ing. Dipl.-Inf., 22047 Hamburg (DE); Wolf, Franz, Dr.-Ing., 22393 Hamburg (DE)
(74) Representative: Jaeschke, Rainer, Dipl.-Ing.

(56) References cited:
- EP-A- 0 829 974
- FR-A- 2 734 368
- US-A- 4 117 484

## Description

The invention concerns methods to alter the coordinates obtained by satellite navigation in a receiving system in such a way that an untrue position is fixed - instead of the correct one - within a certain three-dimensional zone. This simulation of untrue coordinates is summarized by the term manipulation. In connection with altered coordinates, additional navigational information - such as course and speed - can also be influenced. The invention also concerns technical apparatus that enables the method to be applied. In its scope the invention also extends to methods of radio navigation methods in which the role of transmitting satellites is partially or completely taken by other transmitter sites.

Methods and apparatus embodying the invention are not known from publications. Reference is made to the following publications desribing the technical field of the invention. Heister, H. "Einführung in die Postionsbestimmung mit dem Global Positioning System (GPS)", in the monographs series: Studiengang Vermessungswesen Heft 45, Univ.d.Bundeswehr München, pp. 9-27, 1993; Schrödter, F., "GPS Satelliten-Navigation", Franzis-Verlag, 1994; Eissfeller, B., "Stand der GPS-Empfänger-Technologie", monograph series Studiengang Vermessungswesen Heft 45, Univ.d.Bundeswehr München, pp.29-55, 1993; Berking. B., "GPS-Störungen im praktischen Betrieb in der Schiffahrt", lecture material of the Carl-Cranz-Gesellschaft, course: 'Anwendung GPS-Navstar', 1996; Brießmann, N., "GPS in militärischen Anwendungen" lecture material of the Carl-Cranz-Gesellschaft, Seminar 'Die Satellitennavigationssysteme', 1995, Anon., "Key Position, Navigation Signal Demands Jamming Suppression", Signal 8, pp.31-33. 1996; Anon., "Anti-Jam GPS - The best way to nullify a jamming threat", advertisement by Magnavox Electronic System Company (Hughes Defence), Torrance, CA, USA in Signal 7, p.9. 1996.

Several satellite navigation systems are currently in operation and are being employed in numerous applications, of these the systems 'GPS-Navstar' and 'Glonass' are particularly modern and precise. Further satellite navigation systems or the extension thereof are currently in the planning stage, e.g. the European system 'ENSS'. With the assistance of these systems position, speed and course can be determined with high precision and low cost on the basis of receiving and evaluating equipment (navigation receivers).

This precision contains a threat if navigation receivers are increasingly employed in weapons systems or for other military purposes and are available to a potential enemy.

By having the ability to eliminate the receiving power or manipulate the direction-finding capacity of the enemy navigation receiver, it is possible to reduce the effectiveness of the threatening forces or weapons systems. The effectiveness cannot be restored or if so, only through combination with other navigational methods. Such methods that may be used to substitute satellite navigation do not generally achieve comparable precision with similarly low investment.

Methods exist for eliminating reception capability by the irradiation of energy in the frequency bands of the satellite transmitters by means of jamming transmitters. Achieving the necessary reception field strengths for a limited area around the jamming sender appears to present no problems if the energy supply of the transmitter can be guaranteed.

In such a case, for example, unmodulated or noise-modulated jamming methods would be possible which, however, generally exhibit lower efficiency than those that take into account the modulation method and the structure of the modulated satellite codes. However, this use of the satellite codes is only possible if information on these is available to the party preventing satellite navigation. Therefore one of the satellite providers' precautions is to use secret codes occasionally. This occurs, firstly, in order to prevent undesired use of the navigation system and, secondly, to make the possibility of interference with manipulation more difficult.

One precaution adopted by the manufacturers and users of the navigation systems is to check the integrity of the received signals. Hence, if received signals cannot be evaluated, are contradictory or untrustworthy, use of the satellite navigation system will be dispensed with at times. In the case of simple jamming without the use of the codes this would generally be the case. Furthermore, received signals that cannot be evaluated often occur in terrain that is prone to multipath propagation or in sites that are partially shaded from radiation, or even conceivably in areas affected by local interference, without there being any deliberate attempt to jam. Automatic navigation systems therefore have to bridge such situations when signals cannot be evaluated for a certain time.

Measures are also known for suppressing simple interference even when the strength of the reception field of the interference signal is greater than that of the desired signal. For this purpose a so-called adaptive null steering of the antenna system can be applied , which assigns very low gain to one direction of the radiation pattern.

Increased reliability is achieved through common evaluation of different signals and frequency bands or by employing more than one satellite system for obtaining the navigational information. Only a slight advantage is achieved over deliberate jamming.

According to the prior art, countermeasures for the effective hostile use of satellite navigation face the problems described below:
When confronted by a simple jamming measure, a receiving system is not provided with a plausible received signal so that measures to protect the integrity may take effect.
For reasons of secrecy or modifiability the copying of satellite signals without the cooperation of the provider is only possible in the case of published civil codes. Generating replicas jointly with the satellite provider requires substantial logistic support and input in terms of maintaining secrecy as well as constant updating in with the provider's agreement. This cannot always be guaranteed.
The use of simple jamming methods can generally be counteracted with conventional means of radio reconnaissance if these reach the propagation range of the jamming signal.
Direction-selecting precautions on the part of the hostile receiver, in particular, would be able to increase the jamming output required for simple interference to such an extent that the jamming input increases, that an undesirably large area is affected by the interference and that the interference in turn becomes easier to counteract.

In order to avoid the disadvantages involved with the current state of the art, manipulation is proposed by means of the method embodying the invention, instead of simple jamming. Instead of preventing the satellite signal being received or evaluated, this concept strives to alter the position fixed by satellite navigation in enemy navigation receivers in comparison with the true coordinates obtained without detectable intervention. Against the background of the problems currently faced, the following aspects are dealt with in the process:
The hostile navigation receiver is offered a plausible signal, which despite integrity testing is recognized as trustworthy but nevertheless generates navigational information that is not true. Manipulation enables a number of the enemy's precautions and integrity protection measures to be overcome.
Embodiments of the method covered by the invention requires only a few - generally public or easy to acquire - parameters of the transmitting party's signal (frequency, bandwidth, approximate field strength), so that no codes are required. Manipulation is therefore possible without the provider's cooperation. The fact that the cooperation of the satellite provider is not required obviates the need for the aforementioned logistic input and dispenses with the problems of updating.
Embodiments of the invention generally require less transmission power than simple jamming measures. For this reason and because of their signal structure they are more difficult to counteract.
If the null steering on the receiver's side is oriented towards the lack of plausibility of an incoming signal, then this protective measure can be overcome.

The solution embodying the invention is divided into three basic procedural steps:
First a receiving system records satellite signals that arrive at site A.
Then the signals from site A are transferred to another site B.
Finally the signals at another site B are emitted into a certain three-dimensional zone C in a suitable manner.

In this three-dimensional zone C around site B a navigation receiver will obtain the coordinates of A, which do not agree with the true value.

Zone C may have a very different geometry and size. The expanse is determined by transmitting power and the geometry of the antenna. Furthermore, the layout of the terrain has a particular influence on the expanse. A distinction can be made between an almost symmetrical area and a strong directional emphasis.

If there are no restrictions to the spreading, zone C is surrounded by a further zone in which the emitted signal interferes with the satellite signal at approximately the same strength. No precise geographical coordinates can be taken in this zone. The behaviour of the receiving system in this interference zone is uncertain. The effective expanse of the interference zone depends amongst other factors upon the properties of the receiving system. The transmission channel between site A and site B can be constructed in various ways, conceivable methods include changing the frequency band compared with the original signal, coaxial lines, fibre-optic guides, radio relay links or digital transmission methods. The Doppler shift due to movement can be imitated by a slight change in the emitting frequency compared with the receiving frequency.

Repeated use of the proposed method in expansive areas can be particularly effective at distorting the obtainable navigation information. In this way, for example, untrue course corrections can be achieved which generate sufficient deviation for the intended purpose. For instance, one conceivable option would be to set up 'manipulation fields' for the main incoming flight routes of enemy forces and resources.

If the receiving or transmitting sites are designed so that they can be switched, non-constant, false geographical information can be achieved within the zones affected by the emission. The same applies for variable zone size and alignment. This change can be interpreted by the receiving system to be deceived as movement, which would overcome an integrity check based on a minimum velocity criterion.

The common evaluation of different signals and frequency bands or the use of more than one satellite system for obtaining navigation information can be overcome by receiving, transmitting and emitting all the frequency bands employed.

The invention differs beneficially from noise-blanketing countermeasures (such as carrier or noise interference) in that precise but untrue coordinates are determined in the receiving system, without this incorrectness being immediately recognized. The invention also differs beneficially from code-producing deception measures in that no knowledge of the structure of the signal being emitted from the satellite is presupposed and thus any secrecy measures or modification of this signal structure have no effect. Solutions embodying the invention may, for example, crucially reduce the effectiveness of weapons systems navigated by satellite or serve as deceptive or counter measures in other applications concerned with security and weapons technology.

The invention will be better understand with the help of the followong examples:

Manipulation can for example serve to protect important objects (so-called pinpoint targets) against means of reconnaissance and attack controlled by satellite navigation. For this purpose, in the context of object protection, a distinction has to be made between four general functional principles:

Generating pseudo targets, where signals are recorded close to a potential enemy target and are emitted in zones in which the intended effect will not be achieved. The expansion of a pinpoint target to a larger, surrounding pseudo-target zone also reduces the hostile effect.

Masking the object with 'irrelevant' site information; here untrue coordinates are generated in a zone around the potential enemy target so that precise arrival there is made difficult.

Distraction by means of erroneous course corrections during an advance or approach flight; where influence is exerted on the navigation receiver at a site remote from the potential target in order to generate a severe deviation from a planned course. In this way it could be possible to prevent a target being reached or enable a target to be more easily defended.

Generating surveying errors; with the planning data for the enemy attack being distorted wherever it is generated by satellite navigation. This includes survey control of the launching site and the distortion of the coordinates in the reconnaissance information..

A particularly effective application would appear to be the triggering of incorrect flight path corrections for terminally guided precision ballistic munitions without an independent drive in this final phase, since there is little flight time in reserve for remedial corrections.

Another interesting application is against aircraft flying very low or landing if, for reasons of bad visibility and radar camouflage or radar countermeasures, satellite navigation is to be employed to determine the minimum flight altitude. If an incorrectly high altitude reading is simulated in such an aircraft or in a drone ('beaming from above'), a further descent is induced and the probability of a ground collision increases. If an excessively low altitude is simulated ('beaming from below'), an unwanted ascent will be achieved. In this way, for example, detection above the radar horizon of the air defence can occur, flight path errors may be induced or landing can be prevented.

As in many other measures of deception, the effectiveness can be increased by skilful exploitation of the terrain. Effort should be invested in combining this method with other measures of deception and jamming. Examples might be combination with radar countermeasures, remote control measures, aeronautical radio jamming, the deployment of conventional pseudo-targets, artificial fog and chaff dispersal, exploitation of error sources affecting barometric height and meteorological or geographical features. Manipulation has to be coordinated with the deployment of one's own forces.

Rapid surveying by means of satellite-assisted location-finding - even when movement os involved - is of importance for artillery purposes. Manipulation of the enemy surveys may be of military interest. In connection with the laying or clearance of minefields the manipulation of precise coordinates may be of military importance. In this way the locating of mine lanes could be made difficult or errors caused in mine-laying.

Beaming reconnaissance resources would enable their results to be connected with distorted site information and the value of the results to be diminished.

One field of application might be found in manipulating maritime navigation in certain narrow channels (natural, mine lanes), particularly if conventional navigational aids are cancelled for military reasons (radar silence, elimination of buoys). It is also conceivable that the method could be employed against submarines and navy drones that seldom surface if these only carry out correction of inertial navigation systems at certain points. The satellite-controlled, precise navigation of enemy frogmen and small combat resources (speed boats) could be prevented.

One application might be as a permanent object protection of particularly endangered buildings in regions affected by war or civil war.

Factors that might have a restrictive effect on the proposed solutions are calibration processes with other navigation methods when calculating their accuracy, and plausibility checks carried out by personnel. However, this presupposes that the existence of manipulation is suspected or that detailed knowledge exists on the possibilities of manipulation.

If under certain circumstances it then becomes possible to recognize an emitted signal as not trustworthy, there will still be a partial effect in a reduction to simple noise-blanketing interference with a high degree of efficiency, because the signal parameters will be largely maintained.

The invention will be explained in detail with the help of the attached drawings. The schematical figures show some examples of the use of the method and device according to the invention.

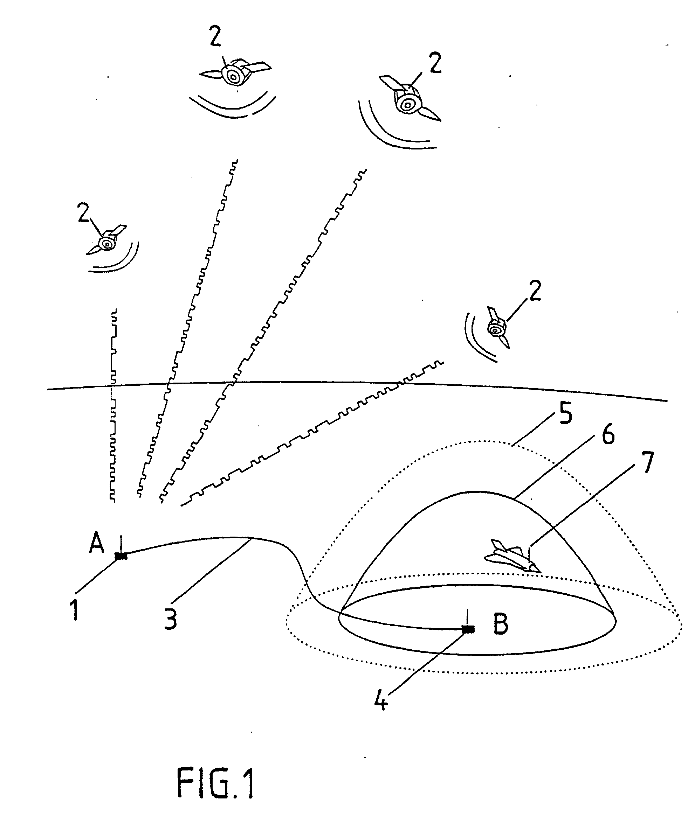

**Figure 1** is a schematic representation of the basic steps in the method. At site A the signals of the visible and available satellites 2 are picked up in a receiving device 1 and transferred to site B by a transmission device 3. There they are emitted by a transmitting device 4. In a three-dimensional environment 6 the signal emitted by the transmitting device predominates so that a navigation receiver 7 located in this zone detects the site information of A. Surrounding this three-dimensional zone 6 with manipulated site information is a further interference zone 5, in which the satellite signals and the signal emitted by the transmitting device interfere to such an extent that no reliable site information can be obtained. The extension of the zones is also determined by the properties of the navigation receiver, influential factors include the geometry of the antenna and its location.

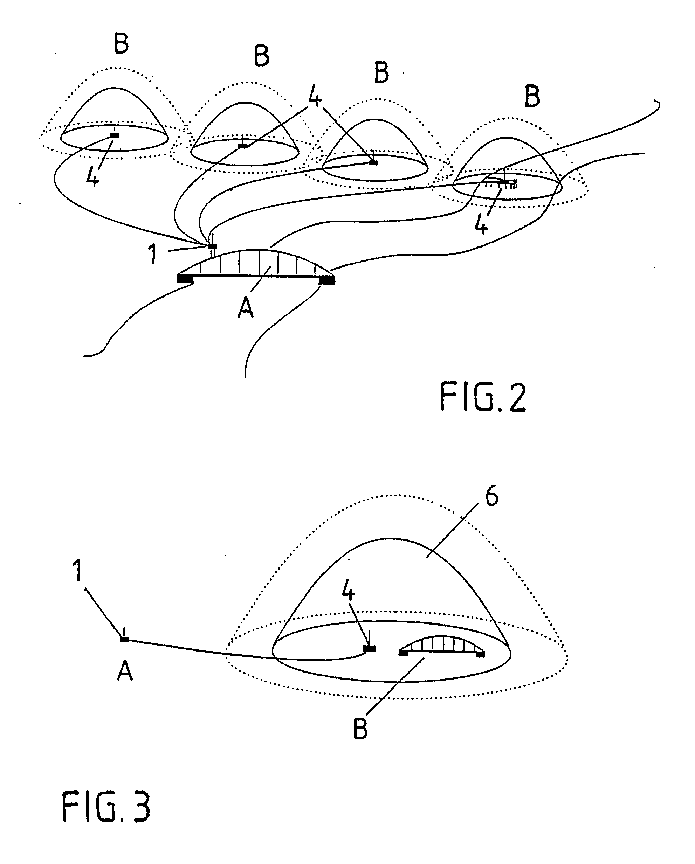

**Figure 2** demonstrates the possible application for generating pseudo-targets in schematic form. The signals are received at the object A to be protected with a suitable device 1. These signals are passed on and emitted via suitable transmitting means 4 at one or more other sites B. A three-dimensional environment around the emitting site(s) has the same site information as the object to be protected. Particularly when this method is combined with other camouflaging and deception techniques it is possible for a pseudo-target to be mistaken for the object to be protected. The effectiveness of the enemy resources against the object under protection is thus diminished.

**Figure 3** is a schematic of the potential application of masking objects B to be protected. At a site A of minor enemy interest the signals are received with a suitable device 1. These signals are passed on and emitted at another site B so that the object to be protected lies within the three-dimensional space 6 around the emitting site. The navigation receiver of a means of attack or reconnaissance entering this space will obtain the same site information as for the less interesting site A. Similarly, a combination with other techniques will prevent the enemy means of attach from finding the protected object precisely. A means of reconnaissance deployed assigns incorrect site information to the object being protected, which can lead to erroneous planning of an attack and reduction of the future risk, particularly if the masking is changed by moving the reception site 1.

One particular advantage of this application lies in the fact that even if the manipulation is recognized by certain future navigation systems, the satellite signal undergoes severe interference in the masked environment.

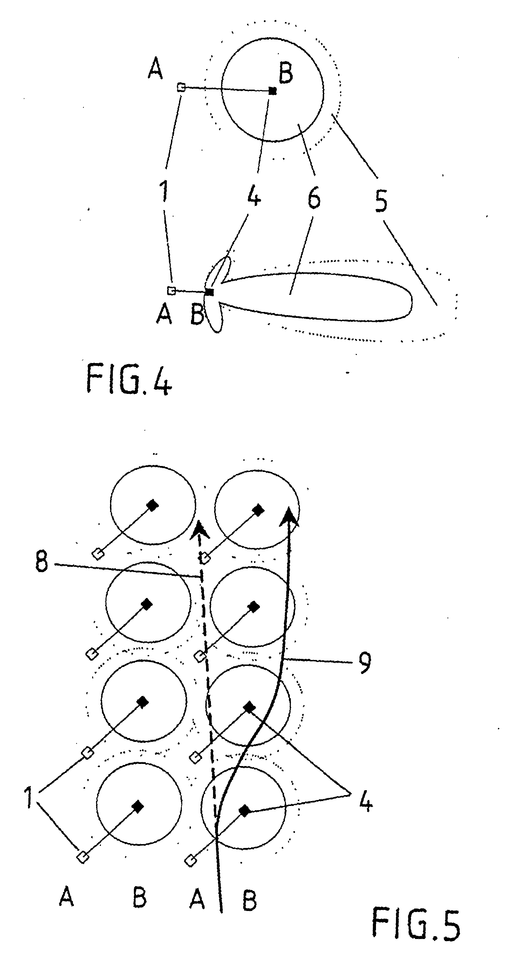

**Figure 4** shows the symmetrical and strongly asymmetrical arrangement of the emission environment in schematic form. The signals are picked up at the receiving site A with a receiving means 1 and transmitted at the emitting site B with a transmission means 4. The zone 6 affected by manipulation is depicted by a continuous perimeter line. It is generally surrounded by an interference zone 5 of imprecise location. The three-dimensional expanse depends upon the emitting geometry of the transmission antenna and the geographical characteristics of the surroundings. Asymmetric emission enables the route for the signal transfer to be kept small and the area affected by manipulation to be designed as large and directional. The zone with manipulation is drawn with a continuous perimeter. The signal receiver and the emission transmitter are indicated by small squares.

**Figure 5** depicts a simplified form of the principle for setting up a field of embodiments of the invention, viewed from above. In this way severe, incorrect course corrections 9 with respect to the initial course 8 can be induced in the enemy forces/resources using a series of manipulated geographical data. The zones in which the manipulated navigational information is detected are depicted by continuous perimeter lines. The locations of signal receiver and emitting device are indicated by a small square.

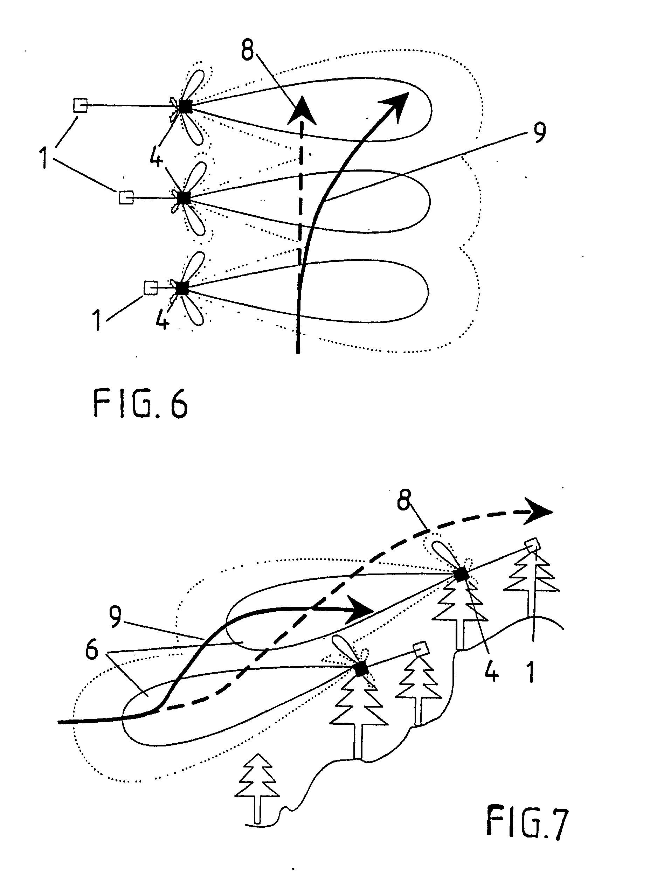

**Figure 6** depicts a simplified form of the principle for setting up a field of embodiments of the invention. The site information used to induce the course manipulation 9 is initially only slightly distorted and then more strongly distorted with respect to the initial course 8. This would enable a continuous drift to be simulated, which would create a more realistic illusion when compared with inertial navigation systems.

**Figure 7** depicts an application scheme for setting up a field of embodiments of the invention. The aim here is to induce a severe course manipulation 1 for a situation in which particular layouts of terrain obstruct a low-flying means of attack. In this case - also when further countermeasures are employed - it is possible to achieve considerable manipulation with the objective of causing a collision with the ground.

If during comparison with other means of measuring altitude the coordinates are no longer trusted, there is still severe disruption of the satellite signals in the area affected by the emissions. In the terrain depicted in the sketch this could be critical or force the aircraft to rise above the reconnaissance horizon of its own air defence.

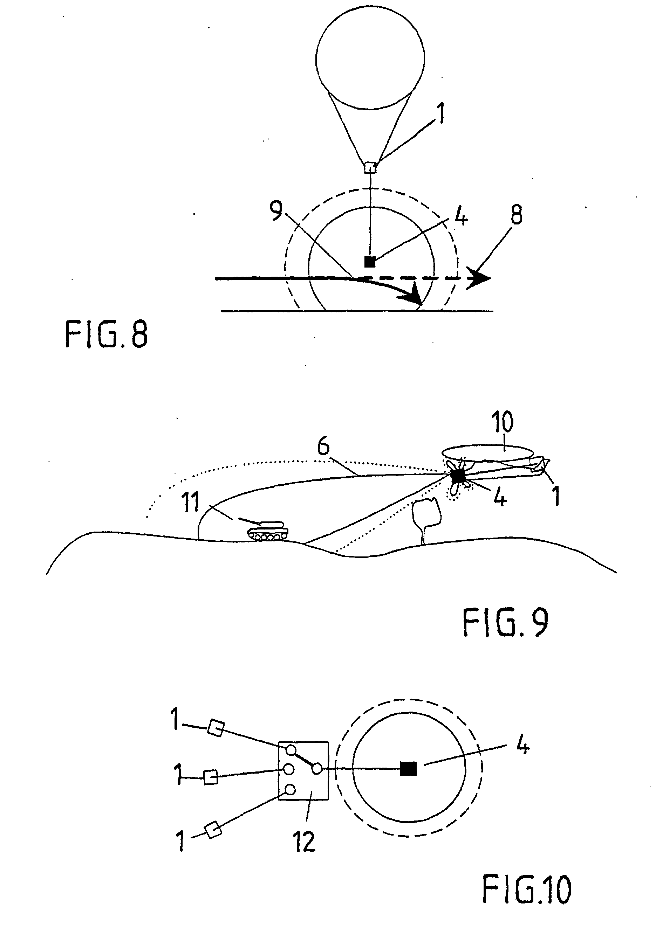

**Figure 8** presents a schematic of the application for embodiments of the invention primarily intended for manipulating the altitude figures. Here the satellite signals are received in an aircraft or tall building and then fed on to be emitted in a lower-lying space. The effects of this manipulation may include causing the enemy means of attack or reconnaissance to perform a critical course correction 9. Of further interest here is the beaming from above with a sharper angle of incidence than from the ground; this results in similar angles to that of the satellite being created.

**Figure 9** presents a schematic of the application for embodiments of the invention for manipulating surveying figures. Satellite signals are received by one's own forces 10, passed on and then emitted in a three-dimensional zone 6 with enemy forces 11. This could for example result in an erroneous reading being taken for a launching position.

**Figure 10** shows a schematic where the devices embodying the invention can be switched between receiving means 1. With the aid of a switching device 12 for the transmission lines to the emitting site 4 it is possible to continuously alter the manipulated coordinates. The multible receiving means 1 can alternatley be connected to the transmitting means 4 ore vice versa. This might for example be interpreted as movement and thus improve the illusion created of moving objects.

## Claims

1. Method for deceiving a satellite navigation receiver, in which the reception of satellite signals that can be picked up at a receiving site (A) and which are crucial for fixing the position of this receiving site, the transmission of said satellite signals to at least one emission site (B) and emission of said satellite signals from the emission site (B) in such a way that the satellite signals that could originally be picked up at the emission site for fixing the position of said emission site are decisively superimposed with the satellite signals received at the receiving site (A).

2. Method as set forth in Claim 1 in which several receiving sites (A) are provided from which each of the crucial satellite signals are transmitted to assigned emitting sites (B) and are emitted there so that in the navigation system being deceived incorrect speeds or courses are derived from the superimposed satellite signals.

3. Method as set forth in claims 1 or 2, in which the reception of the crucial satellite signals is carried out on a selective directional basis.

4. Method as set forth in claims 1 to 3, in which satellite signals crucial for the receiving site are emitted by the emitting site into the three-dimensional space in such a way that the direction can be selected.

5. Method as set forth in claims 1 to 4, in which the satellite signals are transmitted through a screened cable connection and/or by optical means and/or via microwave line-of-sight relay and/or in an analogue or digital form.

6. Method as set forth in claims 1 to 5, comprising the step of amplifying the crucial satellite signals during the transfer.

7. Method as set forth in claims 1 to 6, comprising the step of altering the frequency of the transferred satellite signals.

8. Method as set forth in claims 1 to 7, further comprising the step of delaying the satellite signals during the transfer.

9. Apparatus for deceiving a satellite navigation receiver, comprising a receiving device (1) provided at a receiving site (A) for receiving the satellite signals which can be received there and which are crucial for fixing the position of the receiving site, a device (3) for transferring the said satellite signals to at least one emitting site (B) as well as one transmitting device (4) at the emitting site designated for transmitting said satellite signals in such a way that the satellite signals which could originally be received at the emitting site and which are decisive in fixing the position of the emitting site (B) are superimposed by the satellite signals received at the receiving site (A).

10. Apparatus as set forth in claim 9, in which the transmission device has at least one amplifier for amplifying the transferred satellite signals.

11. Apparatus as set forth in claim 9 or 10, in which the transmission device has screened signal lines and/or optical conversion and transfer media.

12. Apparatus as set forth in one of the claims 9 to 11, in which multiple receiving sites (A) with receiving means (1) are provided from each of which the satellite signals decisive in fixing the position of the receiving site are transferred to multiple correspondingly allocated emitting sites (B) provided with transmission means (4) so that in the navigation receiver that is being deceived incorrect velocities or courses will be derived from the superimposed satellite signals.

13. Use of the method of claims 1-8 and/or the apparatus of claims 9-12 to mask an object and/or a location (B) for navigational purposes by locally transmitting satellite signals of a position corresponding to another object and/or location (A), so as to deceive a navigation receiver in such a way that it is not able to detect when it has reached the position of the masked object and/or location.

14. Use of the method of claims 1-8 and/or apparatus of claims 9-12 for generating a pseudo-target for the position of an object and/or a location (A) by transmitting the satellite signals corresponding to that position (A) at another position (B) so as to deceive a navigation receiver in such a way that it detects having reached this position on the basis of the satellite signals being emitted there, without the said navigation receiver actually being present at the position of the object and/or location.

15. Use of the method of claims 1-8 and/or the apparatus of claims 9-12 to distract a navigation receiver engaged in advance or on an approach flight by repeated use of the method and/or deployment of the apparatus so as to induce a deviation in the scheduled course of the navigation receiver.

## Patentansprüche

1. Verfahren zur Täuschung eines Satellitennavigationsempfängers, welches umfasst den Empfang von Satellitensignalen, die an einem Empfangsort (A) empfangen werden können und die entscheidend für die Festlegung der Position dieses Empfangsortes sind, die Übermittlung der erwähnten Satellitensignale zu mindestens einem Ausstrahlort (B) und die Ausstrahlung der erwähnten Satellitensignale von dem Ausstrahlort (B) derart, dass die Satellitensignale, die ursprünglich am Ausstrahlort zum Festlegen der Position des erwähnten Ausstrahlortes empfangen werden könnten, in entscheidender Weise überlagert werden durch die Satellitensignale, die am Empfangsort (A) empfangen worden sind.

2. Verfahren nach Anspruch 1, bei welchem mehrere Empfangsorte (A) vorgesehen sind, von denen jeweils die entscheidenden Satellitensignale zu zugewiesenen Ausstrahlorten (B) übermittelt und dort ausgestrahlt werden, so dass in dem getäuschten Navigationssystem unrichtige Geschwindigkeiten oder Kurse von den überlagerten Satellitensignalen abgeleitet werden.

3. Verfahren nach den Ansprüchen 1 oder 2, bei welchem der Empfang der entscheidenden Satellitensignale auf einer richtungsselektiven Basis ausgeführt wird.

4. Verfahren nach den Ansprüchen 1 bis 3, bei welchem Satellitensignale, die entscheidend für den Empfangsort sind, von dem Ausstrahlort derart in den dreidimensionalen Raum ausgestrahlt werden, dass die Richtung ausgewählt werden kann.

5. Verfahren nach den Ansprüchen 1 bis 4, bei welchem die Satellitensignale durch eine abgeschirmte Kabelverbindung und/oder optische Mittel und/oder via Mikrowellen-Sichtübertragung und/oder in einer analogen oder digitalen Form übermittelt werden.

6. Verfahren nach den Ansprüchen 1 bis 5, welches den Schritt der Verstärkung der entscheidenden Satellitensignale während der Übermittlung aufweist.

7. Verfahren nach den Ansprüchen 1 bis 6, welches den Schritt der Veränderung der Frequenz der übermittelten Satellitensignale aufweist.

8. Verfahren nach den Ansprüchen 1 bis 7, welches weiterhin den Schritt der Verzögerung der Satellitensignale während der Übermittlung aufweist.

9. Gerät zur Täuschung eines Satellitennavigationsempfängers, umfassend eine Empfangsvorrichtung (1), welche an einem Empfangsort (A) zum Empfangen der Satellitensignale vorgesehen ist, die dort empfangen werden können und die entscheidend für die Festlegung der Position des Empfangsortes sind, eine Vorrichtung (3) zum Übermitteln der erwähnten Satellitensignale zu mindestens einem Ausstrahlort (B), sowie eine Übertragungsvorrichtung (4) an dem Ausstrahlort, die zum Übertragen der erwähnten Satellitensignale bestimmt ist derart, dass die Satellitensignale, die ursprünglich an dem Ausstrahlort empfangen werden könnten und die entscheidend zur Festlegung der Position des Ausstrahlortes (B) sind, überlagert werden von den Satellitensignalen, die am Empfangsort (A) empfangen worden sind.

10. Gerät nach Anspruch 9, bei welchem die Übermittlungsvorrichtung mindestens einen Verstärker zum Verstärken der übermittelten Satellitensignale hat.

11. Gerät nach den Ansprüchen 9 oder 10, bei welchem die Übermittlungsvorrichtung abgeschirmte Signalleitungen und/oder optische Umwandlungs- und Übertragungsmittel hat.

12. Gerät nach einem der Ansprüche 9 bis 11, bei welchem mehrere Empfangsorte (A) mit Empfangsmitteln (1) vorgesehen sind, von denen jeweils die Satellitensignale, die entscheidend für die Festlegung der Position des Empfangsortes sind, an mehrere entsprechend zugeordnete Ausstrahlorte (B) übermittelt werden, die mit Übertragungsmitteln ausgestattet sind, so dass in dem Navigationsempfänger, der getäuscht wird, unrichtige Geschwindigkeiten oder Kurse von den überlagernden Satellitensignalen abgeleitet werden.

13. Verwendung des Verfahrens gemäß den Ansprüchen 1 bis 8 und/oder des Geräts gemäß den Ansprüche 9 bis 12, um ein Objekt und/oder einen Ort (B) für Navigationszwecke zu maskieren durch örtliches Übermitteln von Satellitensignale einer Position, die einem anderen Objekt und/oder Ort (A) zugeordnet ist, um einen Navigationsempfänger in einer Weise zu täuschen, dass er nicht in der Lage ist zu ermitteln, wenn er die Position des maskierten Objekts und/oder Ortes erreicht hat.

14. Verwendung des Verfahrens gemäß den Ansprüchen 1 bis 8 und/oder dem Gerät gemäß den Ansprüchen 9 bis 12 zum Erzeugen eines Pseudoziels für die Position eines Objekts und/oder eines Ortes (A) durch Übermitteln der Satellitensignale, die zu dieser Position (A) gehören, an eine andere Position (B), um einen Navigationsempfänger in einer Weise zu täuschen, dass er ermittelt, dass er diese Position aufgrund der Satellitensignale, die dort ausgestrahlt werden, erreicht hat, ohne dass der erwähnte Navigationsempfänger tatsächlich an der Position des Objekts und/oder des Ortes vorhanden ist.

15. Verwendung des Verfahrens gemäß den Ansprüchen 1 bis 8 und/oder der Einrichtung gemäß den Ansprüchen 9 bis 12 zum Ablenken eines Navigationsempfängers, der im Vormarsch und/oder im Anflug befindlich ist, durch mehrfaches Anwenden des Verfahrens und/oder Einsetzen des Geräts, um eine Abweichung in dem geplanten Kurs des Navigationsempfängers zu verursachen.

## Revendications

1. Procédé pour leurrer un récepteur de navigation par satellite,
dans lequel
on effectue la réception de signaux satellite qui peuvent être captés dans un site de réception (A) et qui sont décisifs pour fixer la position de ce site de réception, ainsi que la transmission de ces signaux satellite vers au moins un site d'émission (B), et l'émission de ces signaux satellite à partir du site d'émission (B), de façon que les signaux satellite qui pourraient initialement être captés dans le site d'émission pour fixer la position de ce site d'émission, soient superposés de façon décisive sur les signaux satellite reçus dans le site de réception (A).

2. Procédé selon la revendication 1,
dans lequel
on prévoit plusieurs sites de réception (A) à partir desquels chacun des signaux satellite décisifs est transmis vers des sites d'émission affectés (B) et se trouve émis dans ces sites, de façon que, dans le système de navigation se trouvant leurré, des vitesses ou des courses incorrectes soient dérivées des signaux satellite superposés.

3. Procédé selon la revendication 1 ou 2,
dans lequel
la réception des signaux satellite décisifs est effectuée sur une base directionnelle sélective.

4. Procédé selon les revendications 1 à 3,
dans lequel
les signaux satellite décisifs pour le site de réception sont émis par le site d'émission dans l'espace à trois dimensions de façon que la direction puisse être sélectionnée.

5. Procédé selon les revendications 1 à 4,
dans lequel
les signaux satellite sont transmis en passant par une connexion de câble blindé et/ou par des moyens optiques et/ou par un relais de ligne de visée micro-onde et/ou sous une forme analogique ou numérique.

6. Procédé selon les revendications 1 à 5,
comprenant
l'étape consistant à amplifier les signaux satellite décisifs pendant le transfert.

7. Procédé selon les revendications 1 à 6,
comprenant
l'étape consistant à modifier la fréquence des signaux satellite transférés.

8. Procédé selon les revendications 1 à 7,
comprenant en outre
l'étape consistant à retarder les signaux satellite pendant le transfert.

9. Dispositif pour leurrer un récepteur de navigation par satellite,
comprenant
un dispositif de réception (1) placé dans un site de réception (A) pour recevoir les signaux satellite qui peuvent être reçus dans ce site et qui sont décisifs pour fixer la position du site de réception,
un dispositif (3) pour transférer les signaux satellite dans au moins un site d'émission (B), ainsi qu'
un dispositif de transmission (4) placé dans le site d'émission et conçu pour transmettre les signaux satellite de façon que les signaux satellite qui pourraient initialement être reçus dans le site d'émission et qui sont décisifs pour fixer la position de ce site d'émission (B), soient superposés avec les signaux satellite reçus dans le site de réception (A).

10. Dispositif selon la revendication 9,
dans lequel
le dispositif de transmission comporte au moins un amplificateur pour amplifier les signaux satellite transférés.

11. Dispositif selon la revendication 9 ou 10,
dans lequel
le dispositif de transmission comporte des lignes de signaux blindées et/ou un support de conversion optique et de transfert.

12. Dispositif selon l'une des revendications à 11,
dans lequel
on prévoit des sites de réception multiples (A) munis de moyens de réception (1) et à partir de chacun desquels les signaux satellites décisifs pour fixer la position du site de réception, sont transférés dans des sites d'émission multiples alloués de façon correspondante (B), munis de moyens de transmission (4) de façon que, dans le récepteur de navigation se trouvant leurré, des vitesses ou des courses incorrectes soient dérivées des signaux satellite superposés.

13. Utilisation du procédé selon les revendications 1-8 et/ou du dispositif selon les revendications 9-12,
pour masquer un objet et/ou un emplacement (B) à des fins de navigation, en transmettant localement des signaux satellites d'une position correspondant à un autre objet et/ou à un autre emplacement (A), afin de leurrer un récepteur de navigation de façon qu'il ne soit pas capable de détecter le moment où il a atteint la position de l'objet masqué et/ou de l'emplacement masqué.

14. Utilisation du procédé selon les revendications 1-8 et/ou du dispositif selon les revendications 9-12,
pour générer une pseudo-cible pour la position d'un objet et/ou d'un emplacement (A), en transmettant les signaux satellite correspondant à cette position (A) vers une autre position (B), afin de leurrer un récepteur de navigation de façon qu'il détecte le fait qu'il a atteint cette position, sur la base des signaux satellite émis dans cette position, sans que le récepteur de navigation soit réellement présent à l'endroit de l'objet et/ou de l'emplacement.

15. Utilisation du procédé selon les revendications 1-8 et/ou du dispositif selon les revendications 9-12,
pour perturber un récepteur de navigation engagé à l'avance ou sur un vol d'approche, par une utilisation répétée du procédé et/ou par la mise en oeuvre du dispositif, de manière à produire une déviation dans la course programmée du récepteur de navigation.
